# EUROPEAN PATENT APPLICATION

(11) **EP 4 576 735 A1**
(43) Date of publication of application: **25.06.2025**
(21) Application number: 23919301.4
(22) Date of filing: 22.08.2023
(51) Int. Cl.: H04L 67/00, H04L 9/00, H04L 12/00

(54) **FAN CHANNEL CONSTRUCTION METHOD AND APPARATUS, AND DEVICE**

(30) Priority: 31.01.2023 CN 202310118481
(71) Applicant: Beijing Goldwind Science & Creation Windpower Equipment Co. Ltd., Beijing 100176 (CN)
(72) Inventor: WEN, Hui, Beijing 100176 (CN); LI, Yubao, Beijing 100176 (CN)
(74) Representative: Gulde & Partner
(86) International application number: PCT/CN2023/114143
(87) International publication number: WO 2024/159736

(57) **Abstract**

The present application is applied to a fan control system. Disclosed are a fan channel construction method and apparatus, and a device. Taking a first peripheral system and a second peripheral system among a plurality of peripheral systems as an example, the method comprises: if the first peripheral system successfully applies for a first channel at a first client, receiving first configuration information which is sent by the first client, and if the second peripheral system successfully applies for a second channel at a second client, receiving second configuration information which is sent by the second client; configuring a third channel on the basis of the first configuration information, and configuring a fourth channel on the basis of the second configuration information, wherein parameters of the third channel and parameters of the fourth channel conform to the definition of a peripheral channel of a control system; and communicating with the first channel of the first peripheral system by means of the third channel, and communicating with the second channel of the second peripheral system by means of the fourth channel. In this way, a universal peripheral-channel structure is provided for a plurality of peripheral systems which need to establish a communication connection with a control system, thereby improving the intelligent control level of a fan.

## Description

The present application claims priority to Chinese Patent Application No.202310118481.5, titled "FAN CHANNEL CONSTRUCTION METHOD AND APPARATUS, AND DEVICE", filed on January 31, 2023 with the China National Intellectual Property Administration, which is incorporated herein by reference in its entirety.

### FIELD

The present disclosure relates to the technical field of wind power generation, and in particular to a channel construction method, a channel construction apparatus for a wind turbine, and a device.

### BACKGROUND

In order to implement intelligent control of a wind turbine, more and more peripheral systems are provided to perform the control of the wind turbine in addition to a main control system for controlling the wind turbine, such as the supervisory control and data acquisition (SCADA) system, the energy management system, and the farm-level control system.

At present, the interactions between respective peripheral systems and the control system are independent from each other. Different peripheral systems may use different communication protocols to interact with the control system. Channel-related information defined in the different communication protocols is inconsistent, and the control system is developed for the different peripheral systems, causing difficulties for establishing an application ecosystem of the wind turbine.

### SUMMARY

A channel construction method, a channel construction apparatus for a wind turbine, and a device are provided according to the present disclosure, to enable peripheral systems and the control system to interact via a channel that is applied for in advance, and implement more intelligent and integrative control of the wind turbine, so as to facilitate and simplify the establishment of the application ecosystem of the wind turbine.

In a first aspect, a channel construction method for a wind turbine is provided according to the present disclosure, which is applied to a control system of a wind turbine. The control system corresponds to multiple peripheral systems. The multiple peripheral systems include a first peripheral system and a second peripheral system. The channel construction method includes:
receiving, if the first peripheral system successfully applies for a first channel at a first client, first configuration information sent by the first client, and receiving, if the second peripheral system successfully applies for a second channel at a second client, second configuration information sent by the second client, where the first configuration information is generated by the first client based on the first channel, and the second configuration information is generated by the second client based on the second channel;
configuring a third channel based on the first configuration information, and configuring a fourth channel based on the second configuration information, where parameters of the third channel and parameters of the fourth channel satisfy a definition of a peripheral channel of the control system; and
communicating with the first channel of the first peripheral system via the third channel, and communicating with the second channel of the second peripheral system via the fourth channel.

In a second aspect, a channel construction method for a wind turbine is provided according to the present disclosure, which is applied to a first client of a first peripheral system, and the channel construction method includes:
acquiring a channel applying request in response to a channel applying operation, where the channel applying request includes parameters of a channel to be applied for;
acquiring a first channel that meets requirements of the parameters of the channel to be applied for;
sending first configuration information of the first channel to a control system of the wind turbine, such that the control system configures a second channel based on the first configuration information, where parameters of the second channel satisfy a definition of a peripheral channel of the control system; and
sending the first configuration information to a channel cloud, where the channel cloud maintains peripheral channels between the control system and multiple peripheral systems through a database instance, and the multiple peripheral systems include a first peripheral system.

In a third aspect, a channel construction method for a wind turbine is provided according to the present disclosure, which is applied to a first peripheral system. The channel construction method includes:
traversing a channel tree structure of a control system of the wind turbine;
performing, if a first channel in the channel tree structure matches a second channel in a channel list maintained locally by the first peripheral system, information interaction with the first channel of the control system via the second channel, where parameters of the first channel satisfy a definition of a peripheral channel of the control system;
if the first channel in the channel tree structure does not match any channel in the channel list maintained locally by the first peripheral system, receiving synchronization information sent by a channel cloud, configuring a third channel based on the synchronization information, and performing information interaction with the first channel of the control system via the third channel, where parameters of the third channel satisfy the definition of the peripheral channel of the control system, and the synchronization information is configuration information, maintained in a database instance of the channel cloud, of channels related to the first peripheral system.

In a fourth aspect, a channel construction apparatus for a wind turbine is provided according to the present disclosure, which is applied to a control system of a wind turbine. The control system corresponds to multiple peripheral systems. The multiple peripheral systems include a first peripheral system and a second peripheral system. The channel construction apparatus includes a receiving unit, a configuring unit, and an interacting unit.

The receiving unit is configured to receive, if the first peripheral system successfully applies for a first channel at a first client, first configuration information sent by the first client, and receive, if the second peripheral system successfully applies for a second channel at a second client, second configuration information sent by the second client. The first configuration information is generated by the first client based on the first channel, and the second configuration information is generated by the second client based on the second channel.

The configuring unit is configured to configure a third channel based on the first configuration information, and configure a fourth channel based on the second configuration information, parameters of the third channel and the fourth channel satisfying a definition of a peripheral channel of the control system.

The interacting unit is configured to communicate with the first channel of the first peripheral system via the third channel, and communicate with the second channel of the second peripheral system via the fourth channel.

In a fifth aspect, a channel construction apparatus for a wind turbine is provided according to the present disclosure, which is applied to a first client of a first peripheral system. The channel construction apparatus includes a first acquiring unit, a second acquiring unit, a first sending unit and a second sending unit.

The first acquiring unit is configured to acquire a channel applying request in response to a channel applying operation. The channel applying request includes parameters of a channel to be applied for.

The second acquiring unit is configured to acquire a first channel that meets requirements of parameters of the channel to be applied for.

The first sending unit is configured to send first configuration information of the first channel to a control system of the wind turbine, such that the control system configures a second channel based on the first configuration information. Parameters of the second channel satisfy a definition of a peripheral channel of the control system.

The second sending unit is configured to send the first configuration information to a channel cloud. The channel cloud maintains peripheral channels between the control system and the multiple peripheral systems through a database instance, and the multiple peripheral systems include a first peripheral system.

In a sixth aspect, a channel construction apparatus for a wind turbine is provided according to the present disclosure, which is applied to a first peripheral system, the channel construction apparatus includes a traversing unit, an interacting unit and a processing unit.

The traversing unit is configured to traverse a channel tree structure of a control system of a wind turbine.

The interacting unit is configured to perform, if a first channel in the channel tree structure matches a second channel in a channel list maintained locally by the first peripheral system, information interaction with the first channel of the control system via the second channel. Parameters of the first channel satisfy a definition of a peripheral channel of the control system.

The processing unit is configured to, if the first channel in the channel tree structure does not match any channel in the channel list maintained locally by the first peripheral system, receive synchronization information sent by a channel cloud, configure a third channel based on the synchronization information, and perform information interaction with the first channel of the control system via the third channel, if the first channel in the channel tree structure does not match the channel in the channel list maintained locally by the first peripheral system. Parameters of the third channel satisfy the definition of the peripheral channel of the control system, and the synchronization information is configuration information, maintained in a database instance of the channel cloud, of channels related to the first peripheral system.

In a seventh aspect, a channel construction system for a wind turbine is provided according to the present disclosure. The channel construction system includes a control system of a wind turbine, multiple peripheral systems corresponding to the control system and clients of the multiple peripheral systems.

The control system is configured to perform the channel construction method provided in the first aspect.

A first peripheral system of the multiple peripheral systems is configured to perform the channel construction method provided in the third aspect.

A first client of the first peripheral system is configured to perform the channel construction method provided in the second aspect.

In an eighth aspect, an electronic device is provided according to the present disclosure, and the electronic device includes a processor and a memory.

The memory stores a computer program.

The processor is configured to, when executing the computer program, perform the channel construction method provided in the first, second, or third aspect.

In a ninth aspect, a computer readable storage medium is provided according to the present disclosure. The computer readable storage medium is configured to store a computer program. The computer program is configured to perform the channel construction method provided in the first, second or third aspect.

It can be seen that the present disclosure has following advantages.

A channel construction method for a wind turbine is provided according to the present disclosure, which is applied to a control system of a wind turbine. The control system corresponds to multiple peripheral systems. A first peripheral system and a second peripheral system of the multiple peripheral systems are taken as an example for illustrating. The channel construction method includes: receiving, if a first peripheral system successfully applies for a first channel at a first client, first configuration information sent by the first client, and receiving, if a second peripheral system successfully applies for a second channel at a second client, second configuration information sent by the second client, where the first configuration information is generated by the first client based on the first channel, and the second configuration information is generated by the second client based on the second channel; configuring a third channel based on the first configuration information, and configuring a fourth channel based on the second configuration information, where parameters of the third channel and parameters of the fourth channel satisfy a definition of a peripheral channel of the control system; communicating with the first channel of the first peripheral system via the third channel, and communicating with the second channel of the second peripheral system via the fourth channel. In this case, a unified standard specification of peripheral channels is defined, so that multiple peripheral systems requiring to establish communication connections with the control system can use a universal peripheral channel structure, and all peripheral systems follow a unified data service and interaction mechanism, avoiding a problem that it is required for the conventional control system to perform customized development for the different peripheral systems of the wind turbine. Various wind turbine models can be automatically identified and adapted without customized development, saving development and maintenance costs, and enabling the different peripheral systems to form an application ecosystem around the control system, thereby improving the intelligent control level of the wind turbine.

### BRIEF DESCRIPTION OF THE DRAWINGS

FIG. 1 is a schematic structural diagram of a scenario of wind turbine control according to one or more embodiments of the present disclosure;
FIG. 2 is a schematic structural diagram of a client 20 and a cloud server 40 according to one or more embodiments of the present disclosure;
FIG. 3 is a flowchart of a channel construction method for a wind turbine according to one or more embodiments of the present disclosure;
FIG. 4 is a schematic diagram of a channel tree structure according to one or more embodiments of the present disclosure;
FIG. 5 is a schematic diagram of an implementation of a channel construction method for a wind turbine according to one or more embodiments of the present disclosure;
FIG. 6 is a flowchart of another channel construction method for a wind turbine according to one or more embodiments of the present disclosure;
FIG. 7 is a flowchart of yet another channel construction method for a wind turbine according to one or more embodiments of the present disclosure;
FIG. 8 is a schematic structural diagram of a channel construction apparatus for a wind turbine according to one or more embodiments of the present disclosure;
FIG. 9 is a schematic structural diagram of another channel construction apparatus for a wind turbine according to one or more embodiments of the present disclosure;
FIG. 10 is a schematic structural diagram of yet another channel construction apparatus for a wind turbine according to one or more embodiments of the present disclosure;
FIG. 11 is a schematic structural diagram of a channel construction system for a wind turbine according to one or more embodiments of the present disclosure; and
FIG. 12 is a schematic structural diagram of an electronic device according to one or more embodiments of the present disclosure.

### DETAILED DESCRIPTION

In order to make the above objectives, features and advantages of the present disclosure more apparent and easier to be understood, the embodiments of the present disclosure are described in detail below in conjunction with the drawings and the embodiments. It should be understood that the specific embodiments described hereafter are only intended to explain the present disclosure, not to limit the present disclosure. It should be further noted that only parts related to the present disclosure, rather than all structures, are shown in the drawings, for ease of description.

In intelligent control of a wind turbine, the economic, efficient, secure, and reliable operation of the wind turbine is implemented by means of a multidimensional complex system with integrated computing, network environment, and physical environment through the application of an advanced measurement and sensing technology, a modeling and analysis technology, and a control and cooperative decision technology. With the increasing demand for the wind turbine control, in addition to the control system for mainly controlling the wind turbine (also referred to as a master control system or a master control programmable logic controller (PLC) of the wind turbine), multiple peripheral systems such as a SCADA system, an energy management system, a farm-level control system, a health management system, or an edge computing control system are involved in the control of wind turbine. The peripheral systems of the wind turbine are independent of each other. Different peripheral systems may use different communication protocols (such as an automation device specification (ADS), a modbus protocol, a profinet protocol, etc.) to interact with the control system. The channel-related information defined in different communication protocols is inconsistent. It is required to perform customized development by the control system on the different peripheral systems, causing difficulties for establishing an application ecosystem of the wind turbine.

Based on the above, in the embodiments of the present disclosure, a unified universal channel structure is established, to cause communications of all peripheral systems with the control system to follow a unified data service and interaction mechanism. Interaction is performed by using pre-applied channels to avoid targeted customized development for the wind turbine. Moreover, the channel configurations of all the wind turbines are intelligently perceived and adapted through the channel construction solution for the wind turbine, implementing the configuration modification of the wind turbine or the upgrade of control system to achieve the self-adaption to the peripheral systems. Therefore, the more intelligent and integrated control of the wind turbine are achieved, facilitating and simplifying the establishment of the application ecosystem of the wind turbine. In specific implementations, the channel construction method provided according to the present disclosure is applied to a control system of a wind turbine. The control system corresponds to multiple peripheral systems. A first peripheral system and a second peripheral system of the multiple peripheral systems are taken as an example for illustrating. The channel construction method includes: receiving, if a first peripheral system successfully applies for a first channel at a first client, first configuration information sent by the first client, and receiving, if a second peripheral system successfully applies for a second channel at a second client, second configuration information sent by the second client, where the first configuration information is generated by the first client based on the first channel, and the second configuration information is generated by the second client based on the second channel; configuring a third channel based on the first configuration information, and configuring a fourth channel based on the second configuration information, where parameters of the third channel and parameters of the fourth channel satisfy a definition of a peripheral channel of the control system; communicating with the first channel of the first peripheral system via the third channel, and communicating with the second channel of the second peripheral system via the fourth channel.

In this case, a unified standard specification of peripheral channels is defined, so that multiple peripheral systems requiring to establish communication connections with the control system can use a universal peripheral channel structure, and all peripheral systems follow a unified data service and interaction mechanism, avoiding a problem that it is required for the conventional control system to perform customized development for the different peripheral systems of the wind turbine. Various wind turbine models can be automatically identified and adapted without customized development, saving development and maintenance costs, and enabling the different peripheral systems to form an application ecosystem around the control system, thereby improving the intelligent control level of the wind turbine.

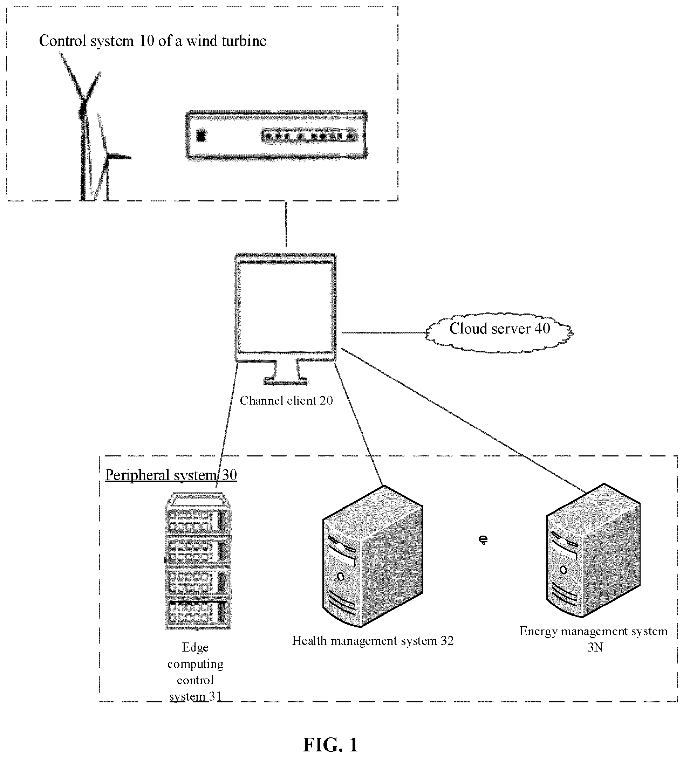

In an embodiment, FIG. 1 shows a scenario where a channel construction method for a wind turbine provided according to an embodiment of the present disclosure is applicable. As shown in FIG. 1, the scenario may include a control system 10, a channel client (hereinafter referred to as a client for short) 20, a peripheral system 30, and a cloud server (corresponding to a channel cloud hereinafter) 40. The peripheral system 30 may include: a peripheral system 31, a peripheral system 32, ..., a peripheral system 3N (N is an integer greater than 1). The peripheral system 30 (the peripheral system 31 is taken as an example) may send a channel applying request to the client 20. After successful applying for a channel (a channel 1 is taken as an example), the client 20 sends configuration information 1 corresponding to the channel 1 to the control system 10. The control system 10 configures a channel 2 based on the configuration information 1. The master control system 10 may communicate with the channel 1 of the peripheral system 31 via the channel 2. In addition, the client 20 may synchronize the configuration information 1 to the cloud server 40. The cloud server 40 maintains peripheral channels between the control system 10 and the multiple peripheral systems 30 through a database instance. In addition, after successfully applying for the channel 1, and before communicating with the control system 10 via the channel 1, the peripheral system 31 further traverses a channel tree structure of the control system 10 of the wind turbine to determine whether the channel 2 in the channel tree structure matches the channel 1 in a channel list maintained locally by the peripheral system 31. If it matches, communication is performed with the channel 2 of the control system 10 via the channel 1; otherwise, synchronization information 2 sent by the cloud server 40 is received, a channel 3 is configured based on the synchronization information 2, and communication is performed with the channel 2 of the control system 10 via the channel 3. Similarly, a process of applying for a channel by another peripheral system may be referred to the above process of applying for the channel 1 by the peripheral system 31, which will not be repeated herein. In FIG. 1, the peripheral system 31 shown as an edge computing control system, the peripheral system 32 shown as a health management system, and the peripheral system 3N shown as an energy management system are taken as an example.

It should be noted that the client 20 may be a client that is connected to the master control system 10 and respective peripheral systems 30, and that can provide an operating platform for the peripheral systems 30 to apply for channels. Generally, the client 20 is only carried in a physical device. However, in another case, the client 20 may serve as a functional module and be carried in each peripheral system 30 that requires to communicate with the control system 10. Then, the client 20 may be understood as client 21, client 22,..., and client 2N collectively, and the clients correspond to the peripheral systems in one-to-one correspondence. In a scenario of the wind turbine, on a physical device with an operational interface, such as a workstation, a work laptop, or a desktop computer of an operation and maintenance engineer, the client 20 may, for example, be carried in an operational application tool (such as an application program or a Web page) of the above physical device. The client mentioned below may be understood to uniquely correspond to the control system, or may be understood to correspond to the respective peripheral systems in one-to-one correspondence, which is not specifically limited in the embodiments of the present disclosure.

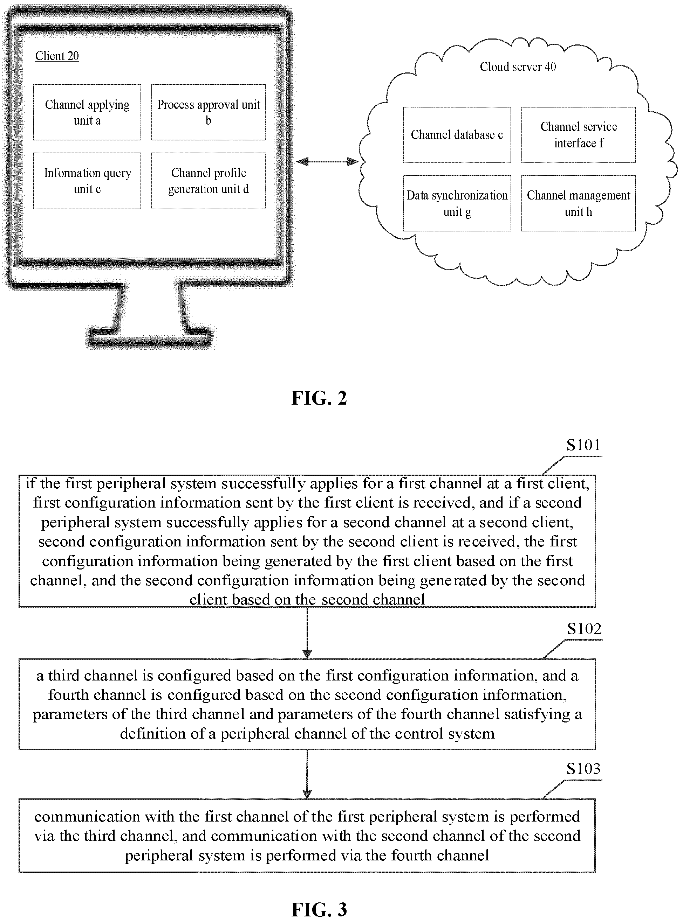

In an embodiment, internal structures of the client 20 and the cloud server 40 for information interaction may be shown in FIG. 2. The client 20 may include a channel applying unit a, a process approval unit b, an information query unit c, and a channel configuration file generation unit d. The cloud server 40 may include a channel database e, a channel service interface f, a data synchronization unit g, and a channel management unit h. A specific function of each unit in FIG. 2 may refer to relevant explanation of the method embodiment shown in FIG. 3.

In order to facilitate the understanding of the specific implementation of the channel construction method for the wind turbine provided according to the embodiments of the present disclosure, description will be made in combination with the attached drawings as follows.

It should be noted that a subject for implementing the channel construction method for the wind turbine may be a channel construction apparatus for the wind turbine provided in the embodiments of the present disclosure. The channel construction apparatus for the wind turbine may be carried in an electronic device or a functional module of the electronic device. The electronic device mentioned above may be any device capable of implementing the channel construction method for the wind turbine in the embodiments of the present disclosure.

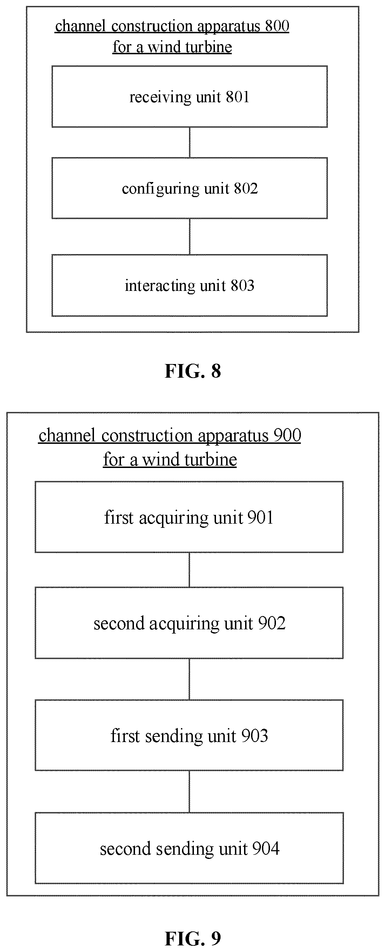

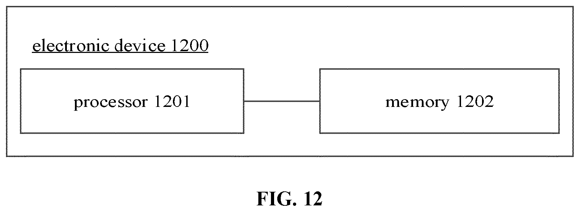

FIG. 3 is a flowchart of a channel construction method for a wind turbine according to an embodiment of the present disclosure. The channel construction method may be applied to a control system for a wind turbine. The control system may be the control system 10 in FIG. 1, and may correspond to the channel construction apparatus for the wind turbine. The channel construction apparatus may be a channel construction apparatus 800 for the wind turbine shown in FIG. 8 (i.e., the channel construction method may be applied to the channel construction apparatus 800 for the wind turbine), or, the channel construction apparatus for the wind turbine may further be integrated in an electronic device 1200 shown in FIG. 12 (i.e., the channel construction method may further be applied to the electronic device 1200). Multiple peripheral systems for the control system for the wind turbine can perform the channel construction method provided in the embodiments of the present disclosure, and a first peripheral system and a second peripheral system of the multiple peripheral systems are described as examples in the following.

As shown in FIG. 3, the channel construction method may include steps S101 to S103.

In step S101, if the first peripheral system successfully applies for a first channel at a first client, first configuration information sent by the first client is received, and if a second peripheral system successfully applies for a second channel at a second client, second configuration information sent by the second client is received, the first configuration information being generated by the first client based on the first channel, and the second configuration information being generated by the second client based on the second channel.

The control system is a master part of control architecture of the wind turbine. The control system can implement important control and protection functions including automatic start, automatic direction regulation, automatic speed regulation, automatic grid connection, automatic separation, automatic failure shutdown, automatic cable unwinding, automatic recording and monitoring of the wind turbine, and provide access interfaces to peripheral systems.

The peripheral systems refer to systems, other than the control system, that are configured to monitor the wind turbine. A peripheral system of the multiple peripheral systems may include but not limited to an energy management system, an SCADA system, an intelligent farm-level control system, a health management system, or an edge computing controller.

In the embodiments of the present disclosure, the control system of the wind turbine may communicate with the multiple peripheral systems of the wind turbine using an OPC UA protocol. OPC UA is a time-sensitive network technology, which can establish a time-sensitive mechanism for supporting network interoperability, and achieve full integration with a breakthrough between the information technology (IT) and operation Technology (OT) in a physical layer, a data link layer, a network layer, a transmission layer, a session layer, a presentation layer, and an application layer. In the control scenario of the wind turbine, the peripheral system may be regarded as an OPC UA client end, and the control system may be regarded as a server end corresponding to the OPC UA client end.

In a process of establishing a connection between the control system and a peripheral system, the control system provides multiple security modes (certificate, encryption, etc.), security policies (asymmetric encryption, secure hash algorithm, etc.), and authentication methods (anonymity, user name, etc.). The security mode, security policy and authentication method may be combined in any manner, as a security guarantee for automatic adaptation when the peripheral system is connected to the master control system.

In S101, the first client and the second client may be the same client, which is a channel client provided by the control system for each peripheral system. Alternatively, the first client and the second client may be different, the first client may be a channel client provided by the control system for the first peripheral system, and the second client may be a channel client provided by the control system for the second peripheral system.

In a case that a peripheral system requires to apply for a channel, the peripheral system may implement applying for the channel through performing an applying operation at a corresponding client. The process of applying for the first channel by the first peripheral system may include: a user performs an applying operation at the first client, and the first client acquires a channel applying request including parameters of a channel to be applied for in response to the applying operation. Thus, the first client acquires the first channel meeting the parameters of the channel to be applied for, and acquires first configuration information of the first channel and sends the same to the control system. In this case, the control system can receive the first configuration information sent by the first client. In addition, the first client may further send the first configuration information to the channel cloud, so that the channel cloud can maintain a peripheral channel between the control system and the first peripheral system through the database instance, improving an intelligent level and reliability of the embodiments of the present disclosure.

Similarly, the process of applying for the second channel by the second peripheral system may include: a user performs an applying operation at the second client, and the second client acquires a channel applying request including parameters of a channel to be applied for in response to the applying operation. Thus, the second client acquires the second channel meeting the parameters of the channel to be applied for, and acquires second configuration information of the second channel and sends the same to the control system. In this case, the control system can receive the second configuration information sent by the second client. In addition, the second client may further send the second configuration information to the channel cloud, so that the channel cloud can maintain a peripheral channel between the control system and the second peripheral system through the database instance, improving the intelligent level and reliability of the embodiments of the present disclosure.

In step S102, a third channel is configured based on the first configuration information, and a fourth channel is configured based on the second configuration information, parameters of the third channel and parameters of the fourth channel satisfying the definition of the peripheral channel of the control system.

In step S103, communication with the first channel of the first peripheral system is performed via the third channel, and communication with the second channel of the second peripheral system is performed via the fourth channel.

A peripheral channel may be understood as a channel defined on the control system and capable of being connected to each of the multiple peripheral systems. In order to enable the control system to communicate with multiple peripheral systems using a unified standard, the control system defines attributes of the peripheral channels. The parameters of the peripheral channels configured by the control system for communication with the peripheral systems are required to satisfy the definition of the peripheral channels on the control system.

The defined attributes of the peripheral channels may include attributes strongly coupled to the wind turbine and universal attributes. For example, the defined attributes of the peripheral channels may include one or more of the following: an applicable wind turbine, an enumeration type, a unit, a data type, grouping information, and a classification, which may be considered as the attributes strongly coupled with the wind turbine. In addition, the defined attributes of the peripheral channels may further include one or more of the following: a channel name, a change frequency, a system to which a channel belongs, and a version number. These attributes may be considered as universal attributes.

The defined attributes of the peripheral channels are described as follows.

The channel name (may further be understood as a universal channel name) refers to a universal standard channel name unified by the control system. For example, channel names corresponding to a wind speed are not consistent in different wind turbine models, which are unified to be a standard channel name by the control system.

The change frequency refers to a change frequency of a numerical value related each channel, which is used to inform the user of the peripheral system whether data in the channel is a slow-varying variable or a transient variable.

The enumeration type is used to express a meaning of each value of a state channel. For example, a state of the wind turbine being equal to 1 indicates startup, and a state of the wind turbine being equal to 2 indicates shutdown.

The unit is a name of the standard quantity used to measure the channel, for example, meters per second (m/s).

The data type (also known as a channel data type) may include, on one hand, basic data types such as integer, float, character, and boolean, and may further includes a complex structure, array, and the like. On the other hand, the data type may be divided into a basic class, an object class, and a method class. The basic class may include the basic data types such as integer, float, character, and boolean, as well as all other channel types derived from the basic data types. The object class may be a channel structure, where one channel has multiple members. The method class is used to define a method, where the method does not perform separate data type definition and can be bound to a corresponding object. For example, some operations may be encapsulated as a method, functions therein can be decoupled, and part of the functions are required to solve conflict problems and determine a collaborative relationship between a relevant priority and enabling logic. For example, there is a conflict between active power regulation and requiring for power limit in the field level, the problem of the conflict is required to be solved first and then the relevant priority and enabling logic are determined.

The applicable wind turbine specifies a range corresponding to an applicable wind turbine model, for example, 1.5 megawatt (MW) or 2.0MW, etc.

The system to which a channel belongs refers to that one or more peripheral systems to which the channel is assigned.

The grouping information refers to grouping information for different channels. For example, load sensors and transmission chain sensors are only arranged at a specific wind turbine model or flagship wind turbine. A group number in the grouping information may range from 1 to 32 to correspond to mask bits.

The version number (may further be understood as a channel version number) corresponds to a version number of the control system.

The classification may include, for example, a static configuration classification, a transient operating-condition classification, a read-only classification, and a readable and writable classification.

In an embodiment, after step S101, the control system may configure the third channel based on the first configuration information and communicate with the first channel of the first peripheral system via the third channel. Similarly, the control system configures the fourth channel based on the second configuration information and communicates with the second channel of the second peripheral system via the fourth channel. The parameters of the third and the fourth channels satisfy the definition of the peripheral channel of the control system.

In some embodiments, in order to implement the intelligent adaptation between the peripheral systems and the control system, in addition to the peripheral channels, it is required to define several universal channels (which may further be called special channel). The universal channel may include but is not limited to, at least one of the following channels in the wind power field: heartbeat-related information, a version number, a wind turbine model, a mask bit, and a peripheral-system version number. Correspondingly to the embodiment, the channel construction method may further include: the control system sends fourth configuration information to the first peripheral system and the second peripheral system respectively, such that the first peripheral system and the second peripheral system configure a universal channel based on the fourth configuration information, where the universal channel is configured to implement adaptation between the control system and the first peripheral system, and adaptation between the control system and the second peripheral system.

The universal channel is introduced as follows.

The heartbeat-related information indicates changes of a heartbeat value for a heartbeat signal sent at a fixed frequency in order to monitor quality of both sides of the communication.

The version number refers to the control system version number and also refers to the channel version number, such that the peripheral systems interact with each other using corresponding version numbers.

The wind turbine model refers to a model identified by the control system of the wind turbine.

The mask bit may be a 32-bit integer value. After the value is converted to a 32-bit binary number, it can be seen from low to high that the first bit identifies a channel set with a group number of 1, the second bit identifies a channel set with a group number of 2, and so on, 32 groups can be identified at most. In a case that the corresponding bit is 1, it is indicated that the channel set of this group exists, and the wind turbine is provided with a corresponding component. For example, the first bit being equal to 1 indicates that the channel set with the group number of 1 exists, and the wind turbine is provided with the corresponding component (such as sensor 1 and sensor 2) at the channel set with the group number of 1.

For peripheral-system version number, it can be understood that each peripheral system has a version number. In a case that a channel of a peripheral system of the multiple peripheral systems changes, only the version number of the peripheral system requires to be modified , and other peripheral systems are not modified.

In some embodiments, the control system may store the channels for interacting with the multiple peripheral systems using a channel tree structure. The channels for interacting with the multiple peripheral systems include the peripheral channels and the universal channel. The peripheral channels may include, for example, one or more of an environment temperature channel, a power channel, a wind speed channel, and a rotation speed channel.

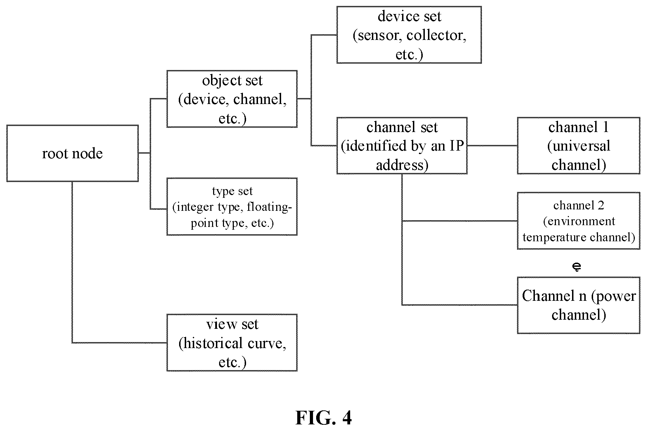

For example, as shown in FIG. 4, a root node of the channel tree structure maintained on the control system may include three sub-nodes: an object set, a type set, and a view set. The object set may include, for example, a device, an object, a method, or an interface, the type set may include, for example, an integer type, a floating-point type, an array, or a custom structure, and the view set may include, for example, a historical curve or a curve formed by a combination of associated objects. As shown in FIG. 4, the object set may include two sub-nodes: a device set and a channel set. The channel set may include channel 1, channel 2,... , and channel n (n is an integer greater than 1), channels in the channel set may be identified based on IP addresses. The device set may include, for example, a sensor, a collector, or a serial port to network port module.

In some embodiments, the applicable peripheral channel or universal channel between the master control system and multiple peripheral systems requires to be managed by the platform to be constrained and managed uniformly. For the client, firstly, the peripheral system requires to apply for a channel to the client when using the channel. If the applying is not successful (no channel matches the parameters of the applied channel), a channel is added. If the applying is successful, the successfully applied channel is assigned to the corresponding peripheral system. Then, the client performs node checking (also known as process approval). If the node checking is passed, a query result is acquired by performing information query on the platform. Finally, the client generates a profile of the successfully applied channel and sends the profile to the control system. For the service cloud, it is required to construct a channel database, and perform interaction with the client through a channel service interface, and all operations on the client are maintained to the channel database. The channel management unit is configured to perform back-end business management. Data synchronization is configured to perform information synchronization with the control system and other peripheral systems.

In an embodiment, the process of synchronization and information transmission by the service cloud may include: the client generates a profile of the channel corresponding to the control system version and sends the profile to the control system; after the channel changes, the peripheral systems (such as an SCADA system, an intelligent farm-level control system, a health management system, or an edge computing controller) synchronize the synchronization information corresponding to the channel changes with the channel cloud. In this manner, the control system configures a channel to adapt to the channel changes of the peripheral system based on the synchronization information, so that the control system can interact with the peripheral system correctly. By taking a change in the first channel of the first peripheral system as an example, the channel construction method may further include: if the first channel of the first peripheral system changes, the controller receives third configuration information from the first client, where the third configuration information is used to indicate the change of the first channel in the first peripheral system and sent by the first peripheral system to the first client through a channel cloud, and the channel cloud is configured to maintain the peripheral channels between the control system and the multiple peripheral systems; and then the control system updates the third channel based on the third configuration information, where parameters of the updated third channel satisfy the definition of the peripheral channel of the control system. Thus, the control system communicates with the first channel of the first peripheral system via the updated third channel.

In the channel construction method according to the present disclosure, a unified standard specification of peripheral channels is defined, so that multiple peripheral systems requiring to establish communication connections with the control system can use a universal peripheral channel structure, and all peripheral systems follow a unified data service and interaction mechanism, avoiding a problem that it is required for the conventional control system to perform customized development for the different peripheral systems of the wind turbine. Various wind turbine models can be automatically identified and adapted without customized development, saving development and maintenance costs, and enabling the different peripheral systems to form an application ecosystem around the control system, thereby improving the intelligent control level of the wind turbine.

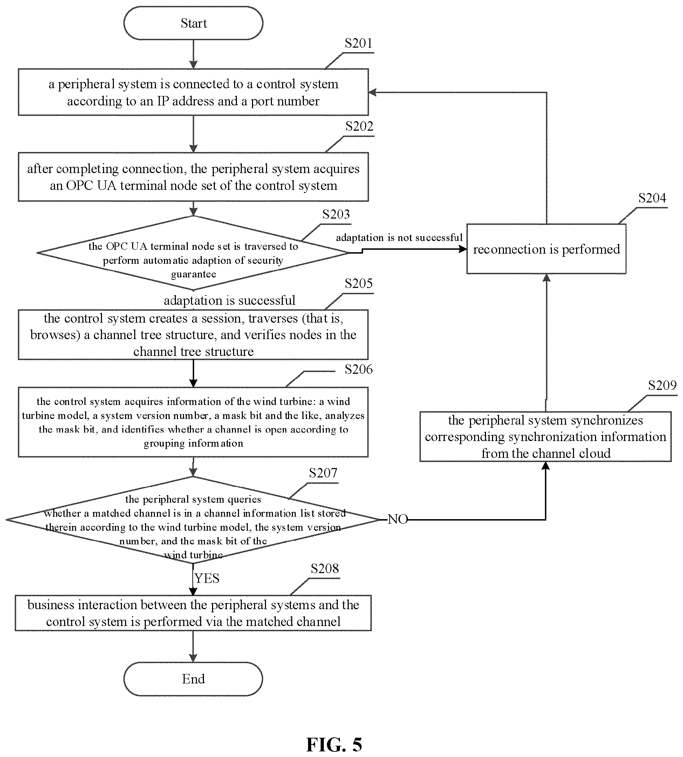

In order to describe the channel construction method according to the embodiment of the present disclosure more clearly, a channel construction process for the wind turbine is illustrated by an example combined with FIG. 5.

Referring to FIG.5, the channel construction method includes following steps S201 to S209.

In step S201, a peripheral system is connected to a control system according to an IP address and a port number.

In step S202, after completing connection, the peripheral system acquires an OPC UA terminal node set of the control system (that is, the channel set of the control system).

In step S203, the OPC UA terminal node set is traversed to perform automatic adaption of security guarantee (including a security policy), S205 is performed if the adaptation is successful, and otherwise, S204 is performed.

In step S204, reconnection is performed, and S201 is performed again.

In step S205, the control system creates a session, traverses (that is, browses) a channel tree structure, and verifies nodes in the channel tree structure.

In step S206, the control system acquires information of the wind turbine: a wind turbine model, a system version number, a mask bit and the like, analyzes the mask bit, and identifies whether a channel is open according to grouping information.

In step S207, the peripheral system queries whether a matched channel is in a channel information list stored therein according to the wind turbine model, the system version number, and the mask bit of the wind turbine; if there is the matched channel, S208 is performed; otherwise, S209 is performed.

In step S208, business interaction between the peripheral systems and the control system is performed via the matched channel.

In step S209, the peripheral system synchronizes corresponding synchronization information from the channel cloud, and step S204 is performed again.

In this manner, an objective of performing interaction between the control system and the respective peripheral systems via unified defined channels is achieved, the channel structure under the universal standard specification of the wind turbine is defined, and the ecological chain of channel maintenance is constructed. A complete set of communication protocols and an intelligent adaptation method are provided. Therefore, all wind turbine models can be automatically identified and intelligently adapted without customized development, saving the cost of development and maintenance. Moreover, the problems such as mutual interference, operating in isolation, and repeated development among related peripheral systems are solved.

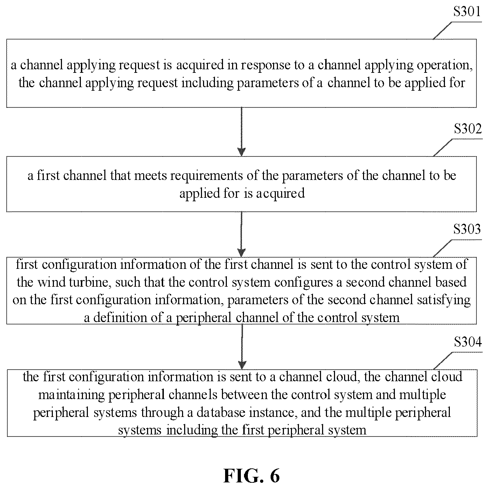

Referring to FIG. 6, a channel construction method for a wind turbine is provided according to an embodiment of the present disclosure, which is applied to a first client of a first peripheral system, and the channel construction method includes following steps S301 to S304.

In step S301, a channel applying request is acquired in response to a channel applying operation, the channel applying request including parameters of a channel to be applied for.

In step S302, a first channel that meets requirements of the parameters of the channel to be applied for is acquired.

In step S303, first configuration information of the first channel is sent to the control system of the wind turbine, such that the control system configures a second channel based on the first configuration information, parameters of the second channel satisfying the definition of the peripheral channel of the control system.

In step S304, the first configuration information is sent to a channel cloud, the channel cloud maintaining peripheral channels between the control system and multiple peripheral systems through a database instance, and the multiple peripheral systems including the first peripheral system.

In an embodiment, step S302 includes:
determining the first channel matching the parameters of the channel to be applied for from existing channels of the first peripheral system; or,
if it is determined that no channel matches the parameters of the channel to be applied for in the existing channels of the first peripheral system, constructing the first channel based on the parameters of the channel to be applied for.

In an embodiment, after step S302 and before step S303, the channel construction method may further include: performing node checking on the first channel; and generating the first configuration information of the first channel if the node checking is passed.

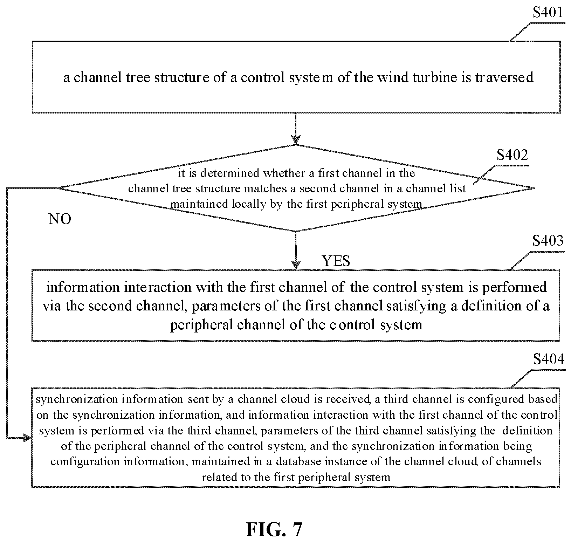

Referring to FIG. 7, a channel construction method for a wind turbine is provided according to an embodiment of the present disclosure, which is applied to a first peripheral system, and the channel construction method includes following steps S401 to S404.

In step S401, a channel tree structure of a control system of the wind turbine is traversed.

In step S402, it is determined whether a first channel in the channel tree structure matches a second channel in a channel list maintained locally by the first peripheral system, and step S403 is performed if matches; otherwise, step S404 is performed.

In step S403, information interaction with the first channel of the control system is performed via the second channel, parameters of the first channel satisfying the definition of the peripheral channel of the control system.

In step S404, synchronization information sent by a channel cloud is received, a third channel is configured based on the synchronization information, and information interaction with the first channel of the control system is performed via the third channel, parameters of the third channel satisfying the peripheral channel definition of the control system, and the synchronization information being configuration information, maintained in a database instance of the channel cloud, of channels related to the first peripheral system.

In an embodiment, the process of step S402 of determining whether the first channel matches the second channel may include, for example: acquiring a wind turbine model, an applicable wind turbine, and grouping information of the first channel; retrieving, from the channel list maintained locally by the first peripheral system, a second channel matching with the first channel in the wind turbine model, the applicable wind turbine, and the grouping information; and determining that the second channel matches the first channel if the first channel is determined to be open based on the grouping of the first channel.

In an embodiment, before S401, the channel construction method may further include: receiving adaptation information sent by the control system, where the adaptation information includes a security mode, a security policy, and an authentication mode; and performing adaptation with the control system based on the adaptation information. S401 may, for example, include: if the adaptation is successful, performing the traversing a channel tree structure of the control system of the wind turbine.

In this embodiment, the first peripheral system may be connected to the control system based on an IP address and a port if it is determined that a preset condition is met. The preset condition includes any one of: establishing a connection with the control system for the first time, the adaptation failing, or no channel matching the first channel in the channel list maintained locally by the first peripheral system.

It should be noted that the relevant descriptions the technical effects achieved in the embodiments shown in FIG. 6 and FIG. 7 can be referred to the relevant descriptions in the embodiment shown in FIG. 3 and FIG.5.

Referring to FIG. 8, a channel construction apparatus 800 for a wind turbine is provided according to the present disclosure, which is applied to a control system of a wind turbine. The control system corresponds to multiple peripheral systems. The multiple peripheral systems include a first peripheral system and a second peripheral system. The channel construction apparatus 800 includes a receiving unit 801, a configuring unit 802, and an interacting unit 803.

The receiving unit 801 is configured to receive, if the first peripheral system successfully applies for a first channel at a first client, first configuration information sent by the first client, and receive, if the second peripheral system successfully applies for a second channel at a second client, second configuration information sent by the second client, the first configuration information being generated by the first client based on the first channel, and the second configuration information being generated by the second client based on the second channel.

The configuring unit 802 is configured to configure a third channel based on the first configuration information, and configure a fourth channel based on the second configuration information, parameters of the third channel and the fourth channel satisfying the definition of the peripheral channel of the control system.

The interacting unit 803 is configured to communicate with the first channel of the first peripheral system via the third channel, and communicate with the second channel of the second peripheral system via the fourth channel.

In an embodiment, the receiving unit 801 is further configured to receive third configuration information from the first client if the first channel of the first peripheral system changes, the third configuration information being used to indicate a change of the first channel in the first peripheral system, and being sent by the first peripheral system to the first client through a channel cloud, and the channel cloud being configured to maintain peripheral channels between the control system and the multiple peripheral systems.

The channel construction apparatus 800 further includes an updating unit and a communicating unit.

The updating unit is configured to update the third channel based on the third configuration information, parameters of the updated third channel satisfying the definition of the peripheral channel of the control system.

The communicating unit is configured to communicate with the first channel of the first peripheral system via the updated third channel.

In an embodiment, the defined attributes of the peripheral channels may include one or more of the following: an applicable wind turbine, an enumeration type, a unit, a data type, grouping information, and a classification.

The defined attributes of the peripheral channels may further include one or more of the following: a channel name, a change frequency, a system to which a channel belongs, and a version number.

In an embodiment, the channel construction apparatus 800 further includes a sending unit.

The sending unit is configured to send fourth configuration information to the first peripheral system and the second peripheral system respectively, such that the first peripheral system and the second peripheral system configure a universal channel based on the fourth configuration information, and the universal channel is configured to implement adaptation between the control system and the first peripheral system, as well as adaptation between the control system and the second peripheral system.

In an embodiment, the universal channel may include but is not limited to, at least one of the following channels in the wind power field: heartbeat-related information, a version number, a wind turbine model, a mask bit, and a peripheral-system version number.

In an embodiment, the control system communicates with the multiple peripheral systems using an OPC UA protocol.

In an embodiment, the channel construction apparatus 800 further includes a storing unit.

The storing unit is configured to store channels for interacting with the multiple peripheral systems through a channel tree structure, the channels for interacting with the multiple peripheral systems include the peripheral channels and the universal channel, and the peripheral channels may include one or more of an environment temperature channel, a power channel, a wind speed channel, and a rotation speed channel.

In an embodiment, the peripheral system of the multiple peripheral systems includes an energy management system, a supervisory control and data acquisition (SCADA) system, an intelligent farm-level control system, a health management system, or an edge computing controller.

The peripheral channel is a channel through which the control system is connected to each of the multiple peripheral systems.

It should be noted that the implementation and the technical effect achieved of the channel construction apparatus 800 can be referred to the relevant description of the channel construction method shown in FIG. 3 and FIG. 5.

Referring to FIG. 9, a channel construction apparatus 900 for a wind turbine is provided according to the present disclosure, which is applied to a first client of a first peripheral system. The channel construction apparatus 900 includes a first acquiring unit 901, a second acquiring unit 902, a first sending unit 903 and a second sending unit 904.

The first acquiring unit 901 is configured to acquire a channel applying request in response to a channel applying operation. The channel applying request includes parameters of a channel to be applied for.

The second acquiring unit 902 is configured to acquire a first channel that meets requirements of the parameters of the channel to be applied for.

The first sending unit 903 is configured to send first configuration information of the first channel to the control system of the wind turbine, such that the control system configures a second channel based on the first configuration information, parameters of the second channel satisfying the definition of the peripheral channel of the control system;
The second sending unit 904 is configured to send the first configuration information to a channel cloud, the channel cloud maintaining peripheral channels between the control system and the multiple peripheral systems through a database instance, and the multiple peripheral systems include the first peripheral system.

In an embodiment, the second acquisition unit 902 is specifically configured to:
determine the first channel matching the parameters of the channel to be applied for from existing channels of the first peripheral system; or,
construct the first channel based on the parameters of the channel to be applied for if it is determined that no channel matches the parameters of the channel to be applied for in the channels of the first peripheral system.

In an embodiment, the channel construction apparatus 900 further includes an checking unit and a generating unit.

The checking unit is configured to perform node checking on the first channel after the first channel meeting requirements of the parameters of the channel to be applied for is acquired and before the first configuration information of the first channel is sent to the control system of the wind turbine.

The generating unit is configured to generate the first configuration information of the first channel if the node checking is passed.

It should be noted that the specific implementation and the technical effect achieved of the channel construction apparatus 900 can be referred to the relevant description of the channel construction method shown in FIG. 5 and FIG. 6.

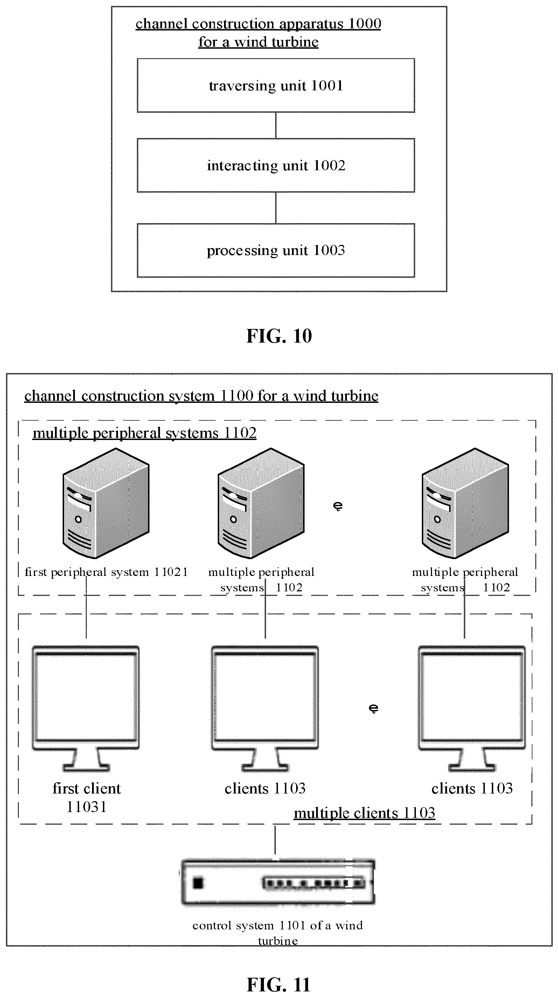

Referring to FIG. 10, a channel construction apparatus 1000 for a wind turbine is provided according to an embodiment of the present disclosure, which is applied to a first peripheral system. The channel construction apparatus 1000 includes a traversing unit 1001, an interacting unit 1002, and a processing unit 1003.

The traversing unit 1001 is configured to traverse a channel tree structure of a control system of the wind turbine.

The interacting unit 1002 is configured to perform, if a first channel in the channel tree structure matches a second channel in a channel list maintained locally by the first peripheral system, information interaction with the first channel of the control system via the second channel, parameters of the first channel satisfying the definition of the peripheral channel of the control system.

The processing unit 1003 is configured to receive synchronization information sent by a channel cloud, configure a third channel based on the synchronization information, and perform information interaction with the first channel of the control system via the third channel if the first channel in the channel tree structure does not match the second channel in the channel list maintained locally by the first peripheral system, the parameters of the third channel satisfying the definition of the peripheral channel of the control system, and the synchronization information being configuration information, maintained in a database instance of the channel cloud, of channels related to the first peripheral system.

In an embodiment, the channel construction apparatus 1000 further includes a determining unit.

The determining unit is configured to determine whether the first channel matches the second channel.

The determining is specifically configured to:
acquire a wind turbine model, an applicable wind turbine, and grouping information of the first channel;
retrieve, from the channel list maintained locally by the first peripheral system, a second channel matching with the first channel in the wind turbine model, the applicable wind turbine, and the grouping information; and
determine that the second channel matches the first channel if the first channel is determined to be open based on the grouping information of the first channel.

In an embodiment, the channel construction unit further includes a receiving unit and an adapting unit.

The receiving unit is configured to receive adaptation information sent by the control system before the channel tree structure of the control system of the wind turbine is traversed, the adaptation information including a security mode, a security policy, and an authentication mode.

The adapting unit is configured to perform adaptation with the control system based on the adaptation information.

The traversing unit 1001 is specifically configured to:
perform the traversing the channel tree structure of the control system of the wind turbine if the adaptation is successful.

In an embodiment, the channel construction apparatus 1000 further includes a connecting unit.

The connecting unit is configured to be connected to the control system based on an IP address and a port if it is determined that a preset condition is met, the preset condition includes any one of: establishing a connection with the control system for the first time, the adaptation failing, or no channel matching the first channel in the channel list maintained locally by the first peripheral system.

It should be noted that the specific implementation and the technical effect achieved of the channel construction apparatus 1000 can be referred to the relevant description of the channel construction method shown in FIG. 5 and FIG. 7.

In addition, referring to FIG. 11, a channel construction system 1100 for a wind turbine is provided according to the present disclosure. The channel construction system 1100 includes a control system 1101 of a wind turbine, multiple peripheral systems 1102 corresponding to the control system and clients 1103 of the multiple peripheral systems.

The control system 1101 is configured to perform the channel construction method provided in FIG.3.

A first peripheral system 11021 of the multiple peripheral systems 1102 is configured to perform the channel construction method provided in FIG. 7.

A first client 11031 of the first peripheral system 11021 is configured to perform the channel construction method provided in FIG. 6.

In addition, an electronic device 1200 is provided according to the present disclosure as shown in FIG. 12, the electronic device 1200 includes a processor 1201 and a memory 1202.

The memory 1202 stores a computer program.

The processor 1201 is configured to, when executing the computer program, perform any one of the channel construction methods provided in FIG. 3 to FIG. 7.

In addition, a computer readable storage medium is provided according to an embodiment of the present disclosure. The computer readable storage medium is configured to store a computer program. The computer program is configured to perform the channel construction method provided in the embodiments of the present disclosure.

From the above embodiments, those skilled in the art can clearly appreciate that all or a part of steps in the method according to the above embodiments may be implemented by means of software and a universal hardware platform. Based on such understanding, technical solutions of the present disclosure may be embodied as a software product. The computer software product may be stored in a storage medium, such as a read-only memory (ROM)/RAM, a magnetic disc, or an optical disk, etc. The computer software product includes multiple instructions for enabling a computer device (which may be a personal computer, a server, or a network communication device such as a router) to perform the methods described in various embodiments or some parts of the embodiments of the present disclosure.

The embodiments are described in this specification in a progressive manner. Various embodiments may refer to each other for the same or similar parts, and each embodiment places emphasis on the difference from other embodiments. Particularly, since the system embodiments and the device embodiments are substantially similar to the method embodiments, the system embodiments and the device embodiments are described briefly, and for relevant parts, reference may be made to the description of the method embodiments. The device and system embodiments described above are only illustrative. The modules described as separate components may be or may not be separated physically, and the components shown as modules may be or may not be physical modules, that is, the components may be located at the same position or may be distributed onto multiple network units. Some or all of the modules may be selected as needed to achieve the object of the solution of the embodiments. Those skilled in the art can understand and implement the solution without any creative effort.

The foregoing descriptions are only exemplary embodiments of the present disclosure but are not intended to limit the protection scope of the present disclosure. It should be noted that, for those skilled in the art, various improvements or modifications may be made without departing the present disclosure, such improvements or modifications are included within the protection scope of the present disclosure.

## Claims

1. A channel construction method for a wind turbine,
applied to a control system of the wind turbine, wherein the control system corresponds to a plurality of peripheral systems, the plurality of peripheral systems comprises a first peripheral system and a second peripheral system,
wherein the channel construction method comprises:
receiving, if the first peripheral system successfully applies for a first channel at a first client, first configuration information sent by the first client, and receiving, if the second peripheral system successfully applies for a second channel at a second client, second configuration information sent by the second client, wherein the first configuration information is generated by the first client based on the first channel, and the second configuration information is generated by the second client based on the second channel;
configuring a third channel based on the first configuration information, and configuring a fourth channel based on the second configuration information, wherein parameters of the third channel and parameters of the fourth channel satisfy a definition of a peripheral channel of the control system; and
communicating with the first channel of the first peripheral system via the third channel, and communicating with the second channel of the second peripheral system via the fourth channel.

2. The channel construction method according to claim 1, further comprising:
receiving third configuration information from the first client in a case that the first channel of the first peripheral system changes, wherein the third configuration information indicate the change of the first channel in the first peripheral system, the third configuration information is sent by the first peripheral system to the first client through a channel cloud, and the channel cloud is configured to maintain peripheral channels between the control system and the plurality of peripheral systems;
updating the third channel based on the third configuration information, wherein parameters of the updated third channel satisfy the definition of the peripheral channel of the control system;
communicating with the first channel of the first peripheral system via the updated third channel.

3. The channel construction method according to claim 1, wherein defined attributes of the peripheral channel comprises one or more of: an applicable wind turbine generator system, an enumeration type, a unit, a data type, grouping information, and a classification; and
the defined attributes of the peripheral channels further comprise one or more of: a channel name, a change frequency, a system to which a channel belongs and, a version number.

4. The channel construction method according to claim 1, further comprising:
sending fourth configuration information to the first peripheral system and the second peripheral system respectively, wherein the first peripheral system and the second peripheral system configure a universal channel based on the fourth configuration information, and the universal channel is configured to implement adaptation between the control system and the first peripheral system, as well as adaptation between the control system and the second peripheral system.

5. The channel construction method according to claim 4, wherein the universal channel comprises at least one of following channels in a wind power field: heartbeat-related information, a version number, a wind turbine model, a mask bit, and a peripheral system version number.

6. The channel construction method according to any one of claims 1 to 5, wherein the control system communicates with the plurality of peripheral systems using an open platform communication unified architecture, OPC UA, protocol.

7. The channel construction method according to any one of claims 1 to 5, further comprising:
storing channels for interacting with the plurality of peripheral systems using a channel tree structure, wherein the channels for interacting with the plurality of peripheral systems comprises the peripheral channels and the universal channel, and the peripheral channels comprise one or more of: an environment temperature channel, a power channel, a wind speed channel, and a rotation speed channel.

8. The channel construction method according to any one of claims 1 to 5, wherein peripheral systems of the plurality of peripheral systems comprise an energy management system, a supervisory control and data acquisition, SCADA, system, an intelligent farm-level control system, a health management system, or an edge computing controller; and
a peripheral channel is a channel through which the control system is connected to each of the plurality of peripheral systems.

9. A channel construction method for a wind turbine, applied to a first client of a first peripheral system, wherein the channel construction method comprises:
acquiring a channel applying request in response to a channel applying operation, wherein the channel applying request comprises parameters of a channel to be applied for;
acquiring a first channel that meets requirements of the parameters of the channel to be applied for;
sending first configuration information of the first channel to a control system of the wind turbine, such that the control system configures a second channel based on the first configuration information, wherein parameters of the second channel satisfy a definition of a peripheral channel of the control system; and
sending the first configuration information to a channel cloud, wherein the channel cloud maintains peripheral channels between the control system and a plurality of peripheral systems through a database instance, and the plurality of peripheral systems comprises the first peripheral system.

10. The channel construction method according to claim 9, wherein the acquiring a first channel that meets requirements of the parameters of the channel to be applied for comprises:
determining the first channel matching the parameters of the channel to be applied for from existing channels of the first peripheral system; or,
constructing the first channel based on the parameters of the channel to be applied for if it is determined that no channel matches the parameters of the channel to be applied for in the existing channels of the first peripheral system.

11. The channel construction method according to claim 9, wherein after the acquiring a first channel that meets requirements of the parameters of the channel to be applied for, and before the sending first configuration information of the first channel to a control system of the wind turbine, the channel construction method further comprises:
performing node checking on the first channel; and
generating the first configuration information of the first channel if the node checking is passed.

12. A channel construction method for a wind turbine, applied to a first peripheral system, wherein the channel construction method comprises:
traversing a channel tree structure of a control system of the wind turbine;
performing, if a first channel in the channel tree structure matches a second channel in a channel list maintained locally by the first peripheral system, information interaction with the first channel of the control system via the second channel, wherein parameters of the first channel satisfy a definition of a peripheral channel of the control system;
if the first channel in the channel tree structure does not match any channel in the channel list maintained locally by the first peripheral system, receiving synchronization information sent by a channel cloud, configuring a third channel based on the synchronization information, and performing information interaction with the first channel of the control system via the third channel, wherein parameters of the third channel satisfy the definition of the peripheral channel of the control system, and the synchronization information is configuration information, maintained in a database instance of the channel cloud, of channels related to the first peripheral system.

13. The channel construction method according to claim 12, wherein a process of determining whether the first channel matches the second channel comprises:
acquiring a wind turbine model, an applicable wind turbine generator system, and grouping information of the first channel;
retrieving, from the channel list maintained locally by the first peripheral system, a second channel matching with the first channel in the wind turbine model, the applicable wind turbine generator system, and the grouping information; and
determining that the second channel matches the first channel if the first channel is determined to be open based on the grouping information of the first channel.

14. The channel construction method according to claim 12, wherein before the traversing a channel tree structure of a control system of the wind turbine, the channel construction method further comprises:
receiving adaptation information sent by the control system, wherein the adaptation information comprises a security mode, a security policy, and an authentication mode; and
performing adaptation with the control system based on the adaptation information; and
wherein the traversing a channel tree structure of a control system of the wind turbine comprises:
performing the traversing a channel tree structure of the control system of the wind turbine if the adaptation is successful.

15. The channel construction method according to claim 14, further comprising:
connecting to the control system based on an internet protocol (IP) address and a port if it is determined that a preset condition is met, wherein the preset condition comprises any one of: establishing a connection with the control system for the first time, the adaptation failing, or no channel matching the first channel in the channel list maintained locally by the first peripheral system.

16. A channel construction apparatus for a wind turbine, applied to a control system of a wind turbine, wherein the control system corresponds to a plurality of peripheral systems, the plurality of peripheral systems comprises a first peripheral system and a second peripheral system, and the channel construction apparatus comprises:
a receiving unit, configured to receive, if the first peripheral system successfully applies for a first channel at a first client, first configuration information sent by the first client, and receive, if the second peripheral system successfully applies for a second channel at a second client, second configuration information sent by the second client, wherein the first configuration information is generated by the first client based on the first channel, and the second configuration information is generated by the second client based on the second channel;
a configuring unit, configured to configure a third channel based on the first configuration information, and configure a fourth channel based on the second configuration information, wherein parameters of the third channel and the fourth channel satisfy a definition of a peripheral channel of the control system; and
an interacting unit, configured to communicate with the first channel of the first peripheral system via the third channel, and communicate with the second channel of the second peripheral system via the fourth channel.

17. A channel construction apparatus for a wind turbine, applied to a first client of a first peripheral system, wherein the channel construction apparatus comprises:
a first acquiring unit, configured to acquire a channel applying request in response to a channel applying operation, wherein the channel applying request comprises parameters of a channel to be applied for.
a second acquiring unit, configured to acquire a first channel that meets requirements of parameters of the channel to be applied for;
a first sending unit, configured to send first configuration information of the first channel to a control system of the wind turbine, such that the control system configures a second channel based on the first configuration information, wherein parameters of the second channel satisfy a definition of a peripheral channel of the control system; and
a second sending unit, configured to send the first configuration information to a channel cloud, wherein the channel cloud maintains peripheral channels between the control system and a plurality of peripheral systems through a database instance, and the plurality of peripheral systems comprises the first peripheral system.

18. A channel construction apparatus for a wind turbine, applied to a first peripheral system, wherein the channel construction apparatus comprises:
a traversing unit, configured to traverse a channel tree structure of a control system of a wind turbine;
an interacting unit, configured to perform, if a first channel in the channel tree structure matches a second channel in a channel list maintained locally by the first peripheral system, information interaction with the first channel of the control system via the second channel, wherein parameters of the first channel satisfy a definition of a peripheral channel of the control system;
a processing unit, configured to, if the first channel in the channel tree structure does not match any channel in the channel list maintained locally by the first peripheral system, receive synchronization information sent by a channel cloud, configure a third channel based on the synchronization information, and perform information interaction with the first channel of the control system via the third channel, wherein parameters of the third channel satisfy the definition of the peripheral channel of the control system, and the synchronization information is configuration information, maintained in a database instance of the channel cloud, of channels related to the first peripheral system.

19. A channel construction system for a wind turbine, comprising a control system of a wind turbine, a plurality of peripheral systems corresponding to the control system and clients of the plurality of peripheral systems, wherein
the control system is configured to perform the channel construction method according to any one of claims 1 to 8;
a first peripheral system of the plurality of peripheral systems is configured to perform the channel construction method according to any one of claims 12 to 15; and
a first client of the first peripheral system is configured to perform the channel construction method according to any one of claims 9 to 11.

20. An electronic device, comprising a processor and a memory, wherein
the memory stores a computer program; and
the processor is configured to, when executing the computer program, perform the channel construction method according to any one of claims 1 to 15.

21. A computer readable storage medium, configured to store a computer program, wherein the computer program is configured to perform the channel construction method according to any one of claims 1 to 15.
